# EUROPÄISCHE PATENTSCHRIFT

(11) **EP 2 793 008 B1**
(45) Veröffentlichungstag und Bekanntmachung des Hinweises auf die Patenterteilung: **06.09.2017**
(21) Anmeldenummer: 13002050.6
(22) Anmeldetag: 18.04.2013
(51) Int. Cl.: G01K 15/00

(54) **Kalibrator zur Kalibrierung von Temperaturmesseinrichtungen**
Calibrator for calibration of temperature measuring devices
Calibrateur pour calibrer des dispositifs de mesure de température

(43) Veröffentlichungstag der Anmeldung: 22.10.2014
(73) Patentinhaber: SIKA Dr.Siebert & Kühn GmbH & Co. KG., 34260 Kaufungen (DE)
(72) Erfinder: Rehm-Gumbel, Michael, 34305 Niedenstein (DE)
(74) Vertreter: Patentanwälte Walther Hinz Bayer PartGmbB

(56) Entgegenhaltungen:
- WO-A1-2010/094332
- US-A1- 2007 291 814

## Beschreibung

Die Erfindung betrifft einen Kalibrator zur Kalibrierung von Temperaturfunktionseinrichtungen, z. B. von Thermometern oder von thermischen Schaltern, mit einer Kalibriereinrichtung gemäß demOberbegriff des Anspruchs 1. Im Folgenden werden unter Temperaturfunktionseinrichtungen solche verstanden, deren Funktion auf der Ermittlung von Temperatur basiert, also, wie bereits ausgeführt, z. B. Thermometer oder auch thermische Schalter.

Eine Kalibriereinrichtung eines Kalibrators ist aus dem Stand der Technik bekannt. Diese Kalibriereinrichtung beinhaltet üblicherweise eine sogenannte Trockenkammer, wobei man unter einer Trockenkammer eine in einem Kalibratorblock angeordnete Kavität versteht, in die ein metallischer Aufnahmekörper einführbar ist, wobei dieser metallische Aufnahmekörper zur Aufnahme der zu kalibrierenden Prüflinge dient. Wesentlich hierbei ist, dass sowohl der Kalibratorblock als auch der Aufnahmekörper jeweils aus einem Material mit guter Wärmeleitfähigkeit, üblicherweise einem Metall, ausgebildet sind. Ziel und Zweck dieser Maßnahme ist, in dem im Kalibratorblock befindlichen Aufnahmekörper eine gleichmäßige, d. h. homogene Temperaturverteilung zu erhalten. In diesem Zusammenhang wird auf die US 2007/0291814 A1 verwiesen, die Kalibratorblöcke und die von den Kalibratorblöcken aufgenommenen Aufnahmekörper aus metallischen Werkstoffen beschreibt. Die Heizeinrichtungen sind hierbei in den metallischen Kalibratorblöcken angeordnet, sodass der Kalibratorblock unmittelbar und der Aufnahmekörper mittelbar aufgeheizt wird.

Die DE 10 2008 034 361 B4 befasst sich damit, eine möglichst homogene Temperaturverteilung in dem Aufnahmekörper zu erzielen, was im Einzelnen durch einen definierten Wärmeeintrag in den Aufnahmekörper erfolgen soll. Ein Kalibrierblock fehlt.

Aus der US 6,193,411 B1 sowie aus der US 2008/0192797 A1 ist bekannt, den Aufnahmekörper unmittelbar mit einer ihn umschließenden Heizeinrichtung zu versehen, um den Aufnahmekörper möglichst schnell aufzuheizen. Hierbei ist der metallische Aufnahmekörper mit der umgebenden Heizeinrichtung durch eine Isolierung in einem Gehäuse gelagert. In Bezug auf die Anordnung der Heizeinrichtung ist in diesem Zusammenhang aus der US 2008/0192797 A1 zusätzlich noch bekannt, in der Außenwand des Aufnahmekörpers Rillen vorzusehen, um dort Drähte als Heizeinrichtung verlaufen zu lassen, die für einen entsprechenden definierten Wärmeeintrag sorgen sollen.

Aus der WO 2010/094332 ist ein Kalibrator der eingangs genannten Art bekannt. Hierbei ist ein Gehäuse vorgesehen, dass zentrisch eine Öffnung für einen Aufnahmekörper aufweist. Der Aufnahmekörper weist eine zentrische Bohrung für eine Temperaturmesseinrichtung auf. Um die zentrische Bohrung gruppiert, finden sich weitere Bohrungen zur Aufnahme von Heizelementen.

Solche Kalibratorblöcke, insbesondere wenn sie aus Metall bestehen, müssen für einen Kalibriervorgang im Wesentlichen auf die gewünschte Kalibriertemperatur aufgeheizt werden. Dies ist aufgrund der Masse eines solchen Metallblocks mit einem erheblichen energetischen und auch zeitlichen Aufwand verbunden. Das heißt immer dort, wo der Kalibratorblock aus einem thermisch leitfähigen Material ausgebildet ist, wobei ein thermisch leitfähiges Material in der Regel auch immer elektrisch leitfähig ist, muss für den eigentlichen Kalibriervorgang dafür gesorgt werden, dass dieser Kalibratorblock zumindest im Bereich der Kavität eine Temperatur aufweist, die der Kalibriertemperatur, das heißt im Wesentlichen der Temperatur im Aufnahmekörper, entspricht. Die Kalibrierung ist umso genauer, je länger die Temperatur in dem Aufnahmekörper über den für die Kalibrierung notwendigen Zeitraum konstant gehalten werden kann. Dies ist gemeinhin dann der Fall, wenn eine große Masse auf eine bestimmte Temperatur erwärmt worden ist. Insofern besteht der Kalibratorblock insbesondere aus Metall.

Es wurde bereits darauf hingewiesen, dass aus dem Stand der Technik bekannt ist, die Aufnahmekörper unmittelbar zu beheizen. Es ist bekannt, dass für unterschiedliche Temperaturmesseinrichtungen unterschiedliche Aufnahmekörper vorzusehen sind. Die Anordnung von Heizeinrichtungen an dem jeweiligen Aufnahmekörper für die entsprechenden Temperaturmesseinrichtungen verursacht insofern einen erheblichen Aufwand, was die Kosten für solche Aufnahmekörper in die Höhe treibt.

Die der Erfindung zugrunde liegende Aufgabe besteht demzufolge darin, eine Kalibriereinrichtung vorzusehen, bei der zum einen für eine gleichmäßige, d. h. homogene Temperaturverteilung im Aufnahmekörper für die Kalibrierung der Temperaturmesseinrichtung gesorgt wird, wobei darüber hinaus eine Vielzahl unterschiedlicher Temperaturmesseinrichtungen mit relativ gesehen geringem Aufwand in einem solchen Kalibratorblock kalibriert werden können, und wobei darüber hinaus die zeitlichen Zyklen zur Kalibrierung auch unterschiedlicher Temperaturmesseinrichtungen gering gehalten werden können.

Zur Lösung der Aufgabe dienen die Merkmale des Anspruches 1. Insbesondere ist vorgesehen, dass die Kalibriereinrichtung einen Kalibratorblock mit einer Kavität sowie einem in die Kavität einsetzbaren und austauschbaren Aufnahmekörper aufweist. Der Kalibratorblock weist ein Material mit thermisch isolierenden Eigenschaften auf, wohingegen der Aufnahmekörper, der der Aufnahme der zu kalibrierenden Temperaturmesseinrichtung dient, ein Material mit thermisch leitfähigen Eigenschaften aufweist. Der Kalibratorblock besitzt hierbei im Bereich der Kavität mindestens eine Heizeinrichtung, die für die Erwärmung des Aufnahmekörpers dient. Maßgeblich für die Erfindung ist einerseits, dass der Kalibratorblock aus einem thermisch isolierenden Material ausgebildet ist, wobei thermisch isolierende Materialien meistens auch solche sind, die elektrisch isolierende Eigenschaften andererseits aufweisen und darüber hinaus durch die Einbettung der Heizeinrichtung in der Mantelfläche der Kavität für einen optimalen Wärmeübergang gesorgt wird. Durch die Einbettung erfolgt eine unmittelbare, intensive Verbindung der Heizeinrichtung mit dem Kalibratorblock, mit der Folge der Erzeugung eines optimalen Wärmeübergangs zum Aufnahmekörper.

In diesem Zusammenhang ist vorstellbar den Kalibratorblock aus einem keramischen Werkstoff oder einem keramikähnlichen Werkstoff auszubilden, wobei unter einem Werkstoff, der einer Keramik ähnlich ist, z. B. ein Glas, ein Glasfaserverbundwerkstoff oder auch ein Porzellanwerkstoff, zu subsumieren ist. Denkbar ist im Übrigen auch, den Kalibratorblock aus einem Kunststoffmaterial herzustellen, beispielsweise einem Polyethylenwerkstoff, also einem Kunststoff, der bis zu höheren Temperaturen temperaturfest ist. Dadurch nun, dass der Kalibratorblock aus einem isolierenden Material ausgebildet ist, wird der Aufnahmekörper wesentlich schneller aufgeheizt, da die Wärme nicht von dem Kalibratorblock als Isolierkörper aufgenommen wird. Überraschenderweise hat sich herausgestellt, dass die Temperaturverteilung über die Länge des Aufnahmekörpers in dem Aufnahmekörper trotz der geringen Masse über eine ausreichende Zeitdauer hinweg, die für eine Kalibrierung ausreichend ist, stabil ist. Insofern eröffnet sich die Möglichkeit, für einen Kalibratorblock mehrere Aufnahmekörper zum Austausch vorzusehen, wobei die einzelnen Aufnahmekörper derart ausgebildet sind, dass sie unterschiedliche Temperaturmesseinrichtungen aufnehmen können.

Ganz konkret wird hierdurch die Möglichkeit eröffnet, dass Techniker, die vor Ort beim Kunden eine Kalibrierung einer solchen Temperaturmesseinrichtung vornehmen sollen, nunmehr nur lediglich eine Mehrzahl an Aufnahmekörpern mit sich führen müssen, die an die unterschiedlichen Temperaturmesseinrichtungen angepasst sind, um diese bei Bedarf in dem Kalibratorblock auszutauschen. Derartige Aufnahmekörper sind auch im Wesentlichen preiswert herstellbar, da, wie dies ebenfalls Gegenstand der Lehre des Anspruches 1 ist, der Kalibratorblock im Bereich der Kavität die mindestens eine Heizeinrichtung aufweist. Das heißt umgekehrt, dass die Aufnahmekörper nicht mit der Heizeinrichtung versehen sind, wie dies im Gegensatz dazu aus dem Stand der Technik bekannt ist.

Vorteilhafte Merkmale und Ausgestaltungen ergeben sich aus den Unteransprüchen.

So ist insbesondere vorgesehen, dass die mindestens eine Heizeinrichtung in der Mantelfläche der Kavität im Kalibratorblock derart eingebettet angeordnet ist, dass sich innerhalb des Aufnahmekörpers über die Länge des Aufnahmekörpers im Wesentlichen eine gleichmäßige und homogene Temperaturverteilung ergibt. Das hat beispielsweise zur Folge, dass am oberen und am unteren Ende des Aufnahmekörpers die Heizeinrichtungen größer dimensioniert sind als auf der Mitte der Länge des Aufnahmekörpers.

Im Einzelnen ist die Heizeinrichtung als elektrisch leitfähige Struktur, beispielsweise als Heizwendel ausgebildet, wobei die elektrisch leitfähige Struktur gegenüber dem Aufnahmekörper, der aus thermisch leitfähigem Material ausgebildet ist, insbesondere also aus einem metallischen Werkstoff, elektrisch isoliert ist. Die elektrische Isolierung wird dadurch bewirkt, dass die Einbettung in das Material der Mantelfläche des Kalibratorblocks das Material des Kalibratorblocks die elektrische leitfähige Struktur zum Aufnahmekörper mit einer dünnen Schicht zu abdeckt.

Es wurde bereits darauf hingewiesen, dass der Kalibratorblock aus einem keramischen Werkstoff ausgebildet sein kann, aber auch aus einem Glas, also einem Keramik ähnlichen Werkstoff. Insbesondere bei der Verwendung eines keramischen Materials zur Herstellung des Kalibratorblockes ist nach einem besonders vorteilhaften Merkmal vorgesehen, dass die Heizwendeln aus elektrisch leitfähigem Material auf eine keramische Folie aufgedruckt sind, wobei die keramische Folie in Form eines Grünlings vorliegt, die mit der Mantelfläche der Kavität des Kalibratorblocks während des Sintervorgangs verbacken wird, d. h. durch den Sintervorgang die Folie in die Mantelfläche der Kavität eingebettet wird. Hierdurch ist insofern eine homogene Einheit aus Kalibratorblock und Heizwendel herstellbar. Die Heizeinrichtung als elektrisch leitfähige Struktur kann allerdings auch auf die Mantelfläche der Kavität vor der Sinterung aufgedruckt werden, und zur elektrischen Isolierung durch z. B. eine Keramikfolie abgedeckt und mit dem keramischen Kalibrierblock gesintert wird, wie dies bereits in Bezug auf die bedruckte Folie beschrieben wurde.

Um einen optimalen Wärmeübergang zwischen Kalibratorblock und Aufnahmekörper im Bereich der Heizeinrichtung zu gewährleisten, liegt der Aufnahmekörper an der Mantelfläche des Kalibratorblocks an.

Des Weiteren ist nach einem besonders vorteilhaften Merkmal der Kalibratorblock im Bereich der Kavität mit mindestens einem Temperatursensor versehen. Im Einzelnen kann hierbei der Temperatursensor als elektrisch leitfähige Struktur ausgebildet sein. Das heißt auch, dass die elektrisch leitfähige Struktur, also insbesondere die Heizwendeln, den Temperatursensor bilden können. Der Temperatursensor kann aber auch durch eine gesonderte elektrisch leitfähige Struktur in Form von metallischen leitfähigen Wendeln gebildet werden.

Anhand der Zeichnungen wird die Erfindung nachstehend beispielhaft näher erläutert.
- Fig. 1: zeigt den Kalibrator mit der Kalibriereinrichtung in einer schematischen Darstellung;
- Fig. 2: zeigt die Kalibriereinrichtung in einer Ansicht von oben;
- Fig. 3: zeigt die Keramikfolie mit aufgedruckter Heizwendel und aufgedrucktem Temperatursensor ebenfalls als Wendel zur Anordnung auf der Mantelfläche der Kavität des Kalibratorblocks.

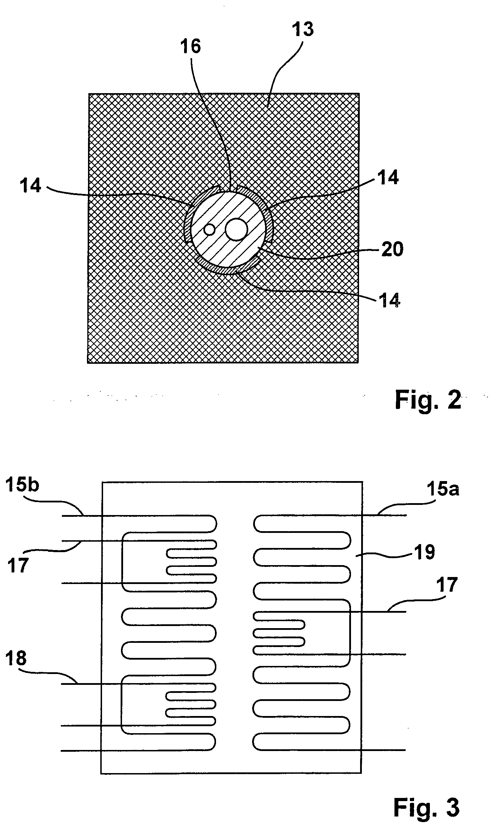

Der insgesamt mit 1 bezeichnete Kalibrator umfasst ein Gehäuse 2 mit einer im Gehäuse angeordneten Platine 3 und einem Trafo 4. Die Platine 3 steht mit einer Steuerung in Verbindung, wobei das Gehäuse zusätzlich noch einen Netzfilter mit Buchse und Sicherung sowie einen Schalter aufweist, wobei diese Baueinheit mit 6 bezeichnet ist. In dem Gehäuse 2 befindet sich darüber hinaus die mit 10 bezeichnete Kalibriereinrichtung mit dem Kalibratorblock 13 aus einem keramischen Material. Dieser Kalibratorblock 13 aus Keramik weist eine Kavität 15 auf, wobei die Kavität 15 der Aufnahme des Aufnahmekörpers 20 dient, wobei der Aufnahmekörper schlussendlich der Aufnahme der Temperaturmesseinrichtungen dient, die kalibriert werden sollen. Der Aufnahmekörper 20 besteht aus einem thermisch gut leitfähigen Metall, wohingegen der Kalibratorblock insbesondere aus einem keramischen Material besteht, das nur eine geringe Leitfähigkeit aufweist, z. B. eine Keramik. Im Bereich der Mantelfläche 16 der Kavität 15 befindet sich die mindestens eine Heizeinrichtung 14. Bevorzugt ist die Heizeinrichtung 14 insbesondere in Form von elektrischen Heizwendeln als elektrisch leitfähige Struktur derart in der Mantelfläche eingebettet, dass diese außenhautbündig mit der Mantelfläche abschließt, sodass der Aufnahmekörper 20 unmittelbar in Verbindung mit der Heizeinrichtung bzw. dem Kalibratorblock in Verbindung steht. Dies kann dadurch geschehen, dass die Heizeinrichtung z. B. Drahtwendeln als elektrisch leitfähige Strukturen in das Material des Kalibratorblocks eingedrückt, also eingebettet werden, wobei das Material des Kalibratorblocks, also z. B. eine Keramik, die Wendeln auf der Seite zum Aufnahmekörper elektrisch isolierend abdeckt. Das heißt, der Keramikkörper wird als Grünling mit den Heizwendeln bestückt und danach gesintert oder gebacken. Denkbar ist allerdings auch und dies ist Gegenstand der Fig. 3, eine Keramikfolie 19 als Grünling vorzusehen, wobei diese Keramikfolie 19 auf die Mantelfläche 16 der Kavität aufgebracht wird, d. h. mit der Mantelfläche bei der Herstellung des Keramikblockes verbacken wird. Die Keramikfolie 19 zeigt Heizwendeln 15a, 15b auf, wobei die Heizwendeln auf die Keramikfolie aufgedruckt sind.

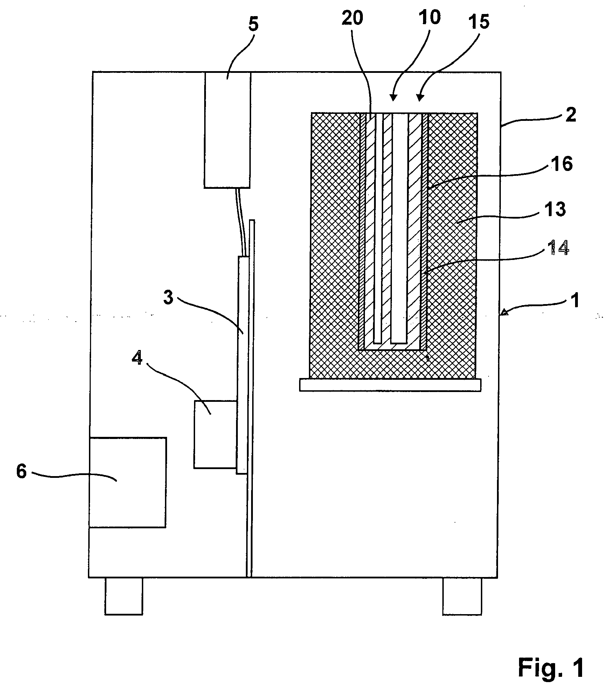

Die Temperatursensoren 17 und 18 sind gemäß Fig. 1 als Wendeln aus elektrisch leitfähigem Material ausgebildet. Wenn die Heizwendeln und die als Wendeln ausgebildeten Temperatursensoren jeweils gesondert auf z. B. eine Keramikfolie aufgedruckt sind, ist vorzusehen, dass die Temperaturwendeln 17, 18 verteilt über die Länge des Aufnahmekörpers auf dem Aufnahmekörper zwischen den Heizwendeln angeordnet sind. Durch diese Ausgestaltung wird es im Einzelnen ermöglicht, über die gesamte Länge des Aufnahmekörpers die jeweilige Temperatur zu ermitteln und gleichzeitig über die gesamte Länge des Aufnahmekörpers eine im Wesentlichen gleichmäßige homogene Temperaturverteilung zu erreichen. Die Folie wird hierbei mit der oder den aufgedruckten Wendeln auf die Mantelfläche 16 der Kavität aufgelegt, sodass die aufgedruckten Wendeln auf die Mantelfläche zuweisen, und die Rückseite der Keramikfolie eine elektrische Isolierung zu dem aus einem metallischen Werkstoff hergestellten Aufnahmekörper bildet.

### Bezugszeichenliste:

- 1: Kalibrator
- 2: Gehäuse
- 3: Platine
- 4: Trafo
- 6: Baueinheit
- 10: Kalibriereinrichtung
- 13: Kalibratorblock
- 14: Heizeinrichtung
- 15: Kavität
- 15a: Heizwendel
- 15b: Heizwendel
- 16: Mantelfläche
- 17: Temperatursensor als Wendel
- 18: Temperatursensor als Wendel
- 19: Keramikfolie
- 20: Aufnahmekörper

## Patentansprüche

1. Kalibrator (1) zur Kalibrierung von Temperaturfunktionseinrichtungen, z. B. Thermometer oder thermischen Schaltern, mit einer Kalibriereinrichtung (10), wobei die Kalibriereinrichtung (10) einen Kalibratorblock (13) und einen Aufnahmekörper (20) aufweist, wobei der Kalibratorblock (13) eine Kavität (15) zum Zweck der Aufnahme des Aufnahmekörpers (20) für mindestens eine zu kalibrierende Temperaturfunktionseinrichtung aufweist, wobei in dem Kalibratorblock im Bereich der Kavität (15) mindestens eine Heizeinrichtung (14) eingebettet ist,
**dadurch gekennzeichnet,**
**dass** der Kalibratorblock ein Material mit thermisch isolierenden und der Aufnahmekörper (20) ein Material mit thermisch leitfähigen Eigenschaften aufweist..

2. Kalibrator (1) zur Kalibrierung von Temperaturfunktionseinrichtungen nach Anspruch 1,
**dadurch gekennzeichnet,**
**dass** die mindestens eine Heizeinrichtung (14) in der Mantelfläche (16) der Kavität (15) im Kalibratorblock derart eingebettet ist, dass sich innerhalb des Aufnahmekörpers (20) eine über die Länge des Aufnahmekörpers (20) im Wesentlichen homogene Temperaturverteilung ergibt.

3. Kalibrator (1) zur Kalibrierung von Temperaturfunktionseinrichtungen nach Anspruch 1 oder 2,
**dadurch gekennzeichnet,**
**dass** die mindestens eine Heizeinrichtung (14) als elektrisch leitfähige Struktur ausgebildet ist.

4. Kalibrator (1) zur Kalibrierung von Temperaturfunktionseinrichtungen nach Anspruch 3,
**dadurch gekennzeichnet,**
**dass** die elektrisch leitfähige Struktur nach der Einbettung gegenüber dem Aufnahmekörper (20) elektrisch isoliert ist.

5. Kalibrator (1) zur Kalibrierung von Temperaturfunktionseinrichtungen nach Anspruch 3 oder 4,
**dadurch gekennzeichnet,**
**dass** die elektrisch leitfähige Struktur als Heizwendel (15a, 15b) ausgebildet ist.

6. Kalibrator (1) zur Kalibrierung von Temperaturfunktionseinrichtungen nach einem der voranstehenden Ansprüche,
**dadurch gekennzeichnet,**
**dass** der Kalibratorblock (13) einen keramischen Werkstoff oder einen Keramik ähnlichen Werkstoff, wie z. B. Glas, aufweist.

7. Kalibrator (1) zur Kalibrierung von Temperaturfunktionseinrichtungen nach Anspruch 6,
**dadurch gekennzeichnet,**
**dass** die Heizwendeln (15a, 15b) auf eine Keramikfolie (19) aufgedruckt sind.

8. Kalibrator (1) zur Kalibrierung von Temperaturfunktionseinrichtungen nach Anspruch 7,
**dadurch gekennzeichnet,**
**dass** die Keramikfolie (19) in der Form eines Grünlings vorliegt, die mit der Mantelfläche (16) der Kavität (15) des Kalibratorblocks (13) verbacken ist.

9. Kalibrator (1) zur Kalibrierung von Temperaturfunktionseinrichtungen nach einem der voranstehenden Ansprüche,
**dadurch gekennzeichnet,**
**dass** der Kalibratorblock (13) im Bereich der Kavität (15) mindestens einen Temperatursensor aufweist.

10. Kalibrator (1) zur Kalibrierung von Temperaturfunktionseinrichtungen nach Anspruch 9,
**dadurch gekennzeichnet,**
**dass** der Temperatursensor als Wendel (17, 18) ausgebildet ist.

11. Kalibrator (1) zur Kalibrierung von Temperaturfunktionseinrichtungen nach einem der voranstehenden Ansprüche 5 bis 10,
**dadurch gekennzeichnet,**
**dass** die Heizwendel (15a, 15b) als Temperatursensor ausgebildet sind.

## Claims

1. A calibrator (1) for calibrating devices with a temperature function, e.g. thermometers or thermal switches, with a calibrating device (10), the calibrating device (10) comprising a calibrator block (13) and a receiving body (20), the calibrator block (13) comprising a cavity (15) for the purpose of receiving the receiving body (20) for at least one temperature measurement device to be calibrated, at least one heating device (14) being embedded in the calibrator block in the area of the cavity (15),
**characterized in that**
the calibration block comprises a material with thermally insulating properties and the receiving body (20) comprises a material with thermally conductive properties.

2. The calibrator (1) for calibrating devices with a temperature function according to claim 1,
**characterized in that**
the at least one heating device (14) is embedded in the circumferential surface (16) of the cavity (15) in the calibrator block in a manner resulting in a substantially homogenous temperature distribution within the receiving body (20) along the length of the receiving body (20).

3. The calibrator (1) for calibrating devices with a temperature function according to claim 1 or 2,
**characterized in that**
the at least one heating device (14) is designed as an electrically conductive structure.

4. The calibrator (1) for calibrating devices with a temperature function according to claim 3,
**characterized in that**
the electrically conductive structure is electrically insulated against the receiving body (20) after the embedment.

5. The calibrator (1) for calibrating devices with a temperature function according to claim 3 or 4,
**characterized in that**
the electrically conductive structure is designed as a heating coil (15a, 15b).

6. The calibrator (1) for calibrating devices with a temperature function according to one of the afore-mentioned claims,
**characterized in that**
the calibrator block (13) comprises a ceramic material or a ceramic-like material such as glass for example.

7. The calibrator (1) for calibrating devices with a temperature function according to claim 6,
**characterized in that**
the heating coils (15a, 15b) are printed onto a ceramic foil (19).

8. The calibrator (1) for calibrating devices with a temperature function according to claim 7,
**characterized in that**
the ceramic foil (19) is provided in the form of a green body that is baked onto the circumferential surface (19) of the cavity (15) of the calibrator block (13).

9. The calibrator (1) for calibrating devices with a temperature function according to one of the afore-mentioned claims,
**characterized in that**
the calibrator block (13) comprises at least one temperature sensor in the area of the cavity (15).

10. The calibrator (1) for calibrating devices with a temperature function according to claim 9,
**characterized in that**
the temperature sensor is designed as a coil (17, 18).

11. The calibrator (1) for calibrating devices with a temperature function according to one of the claims 5 to 10,
**characterized in that**
the heating coils (15a, 15b) are configured as a temperature sensor.

## Revendications

1. Etalonneur (1) pour l'étalonnage de dispositifs ayant une fonction température, par exemple des thermomètres ou des interrupteurs thermiques, avec un dispositif d'étalonnage (10), où le dispositif d'étalonnage (10) comprend un bloc étalonneur (13) et un corps de réception (20), où le bloc étalonneur (13) comprend une cavité (15) pour recevoir le corps de réception (20) pour au moins un dispositif ayant une fonction température à étalonner, où au moins un dispositif de chauffage (14) est encastré dans le bloc étalonneur dans la région de la cavité (15),
**caractérisé en ce que**
le bloc étalonneur comprend un matériau présentant des propriétés d'isolation thermique et le corps de réception (20) comprend un matériau présentant des propriétés de conductivité thermique.

2. Etalonneur (1) pour l'étalonnage de dispositifs ayant une fonction température selon la revendication 1,
**caractérisé en ce que**
l'au moins un dispositif de chauffage (14) est encastré dans l'enveloppe (16) de la cavité (15) dans le bloc étalonneur de telle manière qu'il en résulte une distribution de température essentiellement homogène à l'intérieur du corps de réception (20) sur toute la longueur du corps de réception (20).

3. Etalonneur (1) pour l'étalonnage de dispositifs ayant une fonction température selon la revendication 1 ou 2,
**caractérisé en ce que**
l'au moins un dispositif de chauffage (14) est configuré comme une structure électriquement conductrice.

4. Etalonneur (1) pour l'étalonnage de dispositifs ayant une fonction température selon la revendication 3,
**caractérisé en ce qu'**
après l'encastrement, la structure électriquement conductrice est isolée électriquement du corps de réception (20).

5. Etalonneur (1) pour l'étalonnage de dispositifs ayant une fonction température selon la revendication 3 ou 4,
**caractérisé en ce que**
la structure électriquement conductrice est configurée comme un serpentin de chauffage (15a, 15b).

6. Etalonneur (1) pour l'étalonnage de dispositifs ayant une fonction température selon l'une des revendications précédentes,
**caractérisé en ce que**
le bloc étalonneur (13) comprend un matériau céramique ou un matériau de type céramique, comme du verre par exemple.

7. Etalonneur (1) pour l'étalonnage de dispositifs ayant une fonction température selon la revendication 6,
**caractérisé en ce que**
les serpentins de chauffage (15a, 15b) sont imprimés sur une feuille céramique (19).

8. Etalonneur (1) pour l'étalonnage de dispositifs ayant une fonction température selon la revendication 7,
**caractérisé en ce que**
la feuille céramique (19) est fournie sous la forme d'un corps non cuit qui est cuit avec l'enveloppe (16) de la cavité (15) du bloc étalonneur (13).

9. Etalonneur (1) pour l'étalonnage de dispositifs ayant une fonction température selon l'une des revendications précédentes,
**caractérisé en ce que**
le bloc étalonneur (13) comprend au moins un capteur de température dans la région de la cavité (15).

10. Etalonneur (1) pour l'étalonnage de dispositifs ayant une fonction température selon la revendication 9,
**caractérisé en ce que**
le capteur de température est réalisé sous forme d'un serpentin (17, 18).

11. Etalonneur (1) pour l'étalonnage de dispositifs ayant une fonction température selon l'une des revendications précédentes 5 à 10,
**caractérisé en ce que**
le serpentin chauffant (15a, 15b) est réalisé sous forme d'un capteur de température.
